# EUROPÄISCHE PATENTSCHRIFT

(11) **EP 2 606 232 B1**
(45) Veröffentlichungstag und Bekanntmachung des Hinweises auf die Patenterteilung: **13.08.2014**
(21) Anmeldenummer: 11726430.9
(22) Anmeldetag: 21.06.2011
(51) Int. Cl.: F04B 53/02, F04B 53/16, F16J 15/32, F16J 15/56

(54) **DICHTRING FÜR EINE KOLBENPUMPE**
SEALING RING FOR A PISTON PUMP
BAGUE D'ÉTANCHÉITÉ POUR UNE POMPE À PISTON

(30) Priorität: 18.08.2010 DE 102010039439
(43) Veröffentlichungstag der Anmeldung: 26.06.2013
(73) Patentinhaber: Robert Bosch GmbH, 70442 Stuttgart (DE)
(72) Erfinder: GOSSE, Daniel, 10115 Berlin (DE)
(86) Internationale Anmeldenummer: PCT/EP2011/060287
(87) Internationale Veröffentlichungsnummer: WO 2012/022519

(56) Entgegenhaltungen:
- EP-A1- 1 739 305
- DE-A1-102004 010 498
- DE-A1-102006 035 055
- DE-A1-102007 052 664
- GB-A- 2 077 368

## Beschreibung

### Stand der Technik

Die Erfindung betrifft einen Dichtring für eine Kolbenpumpe nach der Gattung des unabhängigen Patentanspruchs 1 und eine Kolbenpumpe nach Gattung des unabhängigen Patentanspruchs 6.

Dichtringe für Kolbenpumpen nach den gattungsbildenden Merkmalen des Anspruchs 1 sind beispielsweise aus der EP 1 739 305 A1 (Fig. 2 und 3) oder der DE 10 2006 035055 A1 (Fig. 6a) bereits bekannt. Diese Dichtringe sind mit Dichtlippen ausgestattet, die von Federelementen mechanisch vorgespannt werden. Die Vorspannung wird durch eine Verformung der Dichtringe während der Montage erzeugt, wobei der Verformungsgrad der Dichtringe die Winkel bestimmt, welche die jeweiligen Schenkel der Dichtlippen im eingebauten Zustand des Dichtrings mit dem abzudichtenden Bauteil einnehmen. Ein Dichtring für eine Kolbenpumpe mit einer Dichtlippe, die nicht durch ein Federelement vorgespannt ist, offenbart ferner die GB 2 077 368 A.

In der DE 101 16 658 A1 wird beispielsweise eine Kolbenpumpe mit einem Dichtring beschrieben, welcher zur dynamischen Abdichtung eines in einem Kolbengehäuse geführten Kolbens der Kolbenpumpe vorgesehen ist, wobei der Dichtring an einem eine Lauffläche ausbildenden Außenumfang des Kolbens anzuordnen ist. Der Dichtring umfasst einen ringförmigen Grundkörper, welcher einen im Wesentlichen viereckigen Querschnitt aufweist, und vier an den Ecken des Grundkörpers ausgeformte, umlaufende Dichtlippen, zwischen denen umlaufende Nuten ausgebildet sind.

Aus der DE 10 2004 010 498 A1 ist ein einen Kolben einer Kolbenpumpe abdichtender Dichtring aus einem elastomeren Material bekannt. Der Dichtring umfasst einen ringförmigen Grundkörper, welcher einen im Wesentlichen viereckigen Querschnitt aufweist, und vier an den Ecken des Grundkörpers ausgeformte Dichtlippen mit dazwischen angeordneten Nuten. Zur Verbesserung der Haltbarkeitseigenschaften weist der Dichtring eine Beschichtung auf.

### Offenbarung der Erfindung

Der erfindungsgemäße Dichtring mit den Merkmalen des unabhängigen Patentanspruchs 1 hat demgegenüber den Vorteil, dass ausgehend von Ausgangswinkeln die definierten Winkel beim Einbau durch Verformung des Dichtringes erreicht werden. Der Dichtring erfährt bei der Montage eine Verwindung um einen Mittelpunkt seines Profils. In vorteilhafter Weise ergibt sich hierdurch ein Dichtring, welcher eine erhöhte Dichtwirkung und eine höhere Lebensdauer aufweist, indem der Dichtring seine funktionsrelevante Form erst im eingebauten Zustand einnimmt. In vorteilhafter Weise ergibt sich ein Dichtring, welcher ungerichtet montiert werden kann bzw. bei der Montage nicht ausgerichtet werden muss, so dass eine einfache und kostengünstige Montage des Dichtrings ermöglicht ist. Dies bedeutet zudem, dass ein separater Erkennungsprozess entfallen kann. Das Risiko einer Fehlmontage, bei welcher anschließend eine massive Leckage auftreten kann, welche im Betrieb der Kolbenpumpe nicht detektiert werden kann, und ein nachfolgender Ausfall eines kompletten Aggregats kann somit sicher vermieden werden. Insbesondere kann die Bauraumgestaltung im Kolbengehäuse oder Führungsring derart ausgeführt sein, dass der Dichtring durch die Verformung seines Profils in einer asymmetrischen Position fixierbar ist, wodurch die Funktion eines asymmetrischen Dichtringes erreichbar ist. Hierdurch ergeben sich im Vergleich zur Herstellung eines asymmetrischen Dichtringes auch geringere Werkzeugkosten, da die Herstellung von symmetrischen Teilen kostengünstiger ist. In vorteilhafter Weise umfasst der Dichtring eine Nut im Außenquerschnitt bzw. an seiner Außenumfangsfläche, um das Anpressen der Dichtlippe bei höheren Drücken zu unterstützen.

Durch die in den abhängigen Ansprüchen aufgeführten Maßnahmen und Weiterbildungen sind vorteilhafte Verbesserungen des im unabhängigen Patentanspruch 1 angegebenen Dichtrings möglich.

In vorteilhafter Weise nimmt der Dichtring seine funktionsrelevante Form dabei erst im eingebauten Zustand ein. Vorzugsweise beträgt die Verwindung des Profils des Dichtringes zwischen 19° und 22°.

In Ausgestaltung der Erfindung weist der Dichtring zwei an der Innenumfangsfläche umlaufende Nuten auf, welche zwei Lippen bilden, zwischen denen die Dichtlippe ausgeformt ist. Besonders vorteilhaft ist, dass die Dichtlippe in radialer Richtung über die Lippen übersteht. Die Ausgestaltung ermöglicht, dass die Lippen in vorteilhafter Weise auch bei hohen Drücken von den benachbarten Bauteilen der Kolbenpumpe ferngehalten werden, d.h. weder die Lauffläche berühren noch spaltextrusionsgefährdet sind.

Zusätzlich kann die Konstruktion der Kolbenpumpe unverändert bleiben, da der vorhandene Bauraum in der Kolbenpumpe eine Veränderung der Geometrie des Dichtrings in radialer Richtung problemlos zulässt.

Die Dichtlippe weist vorzugsweise einen Radius auf, der zwischen 0,1 und 0,4mm beträgt. Hierdurch ergibt sich in vorteilhafter Weise eine einfache und kostengünstige Herstellung des Dichtringes.

Ein wesentlicher Vorteil der erfindungsgemäßen Kolbenpumpe besteht darin, dass der Dichtring über mindestens drei Anlageflächen in einer zwischen zwei Bauteilen der Kolbenpumpe verlaufenden Nut angeordnet ist. In vorteilhafter Weise ergibt sich nach der Montage der Kolbenpumpe bzw. nach dem Einbau des Dichtringes eine sichere Lage des Dichtringes innerhalb der Nut. Durch die Positionsstabilität des Dichtrings bleibt die gewünschte dynamische Dichtfunktion dauerhaft während des Betriebs der Kolbenpumpe erhalten und der Dichtring widersteht im Laufe des Betriebs dem bestehenden Druck in der Kolbenpumpe.

In Ausgestaltung der erfindungsgemäßen Kolbenpumpe wird ein erster Schenkel des Dichtrings axial mit einem höheren Druck und ein zweiter Schenkel des Dichtrings axial mit einem niedrigeren Druck beaufschlagt. In vorteilhafter Weise ist der Dichtring in der Nut sicher gelagert und der hydraulische Druck kann den Dichtring nur mehr gering beaufschlagen, so dass der erfindungsgemäße Dichtring seine Dichtfunktion sicher erfüllen kann. Hierdurch erhöht sich in vorteilhafter Weise die Lebensdauer des erfindungsgemäßen Dichtrings, wodurch die Wartungsintervalle verlängert bzw. die Ausfallzeiten der Kolbenpumpe durch defekte Dichtringe minimiert werden können.

In weiterer Ausgestaltung der erfindungsgemäßen Kolbenpumpe beträgt der definierte Winkel zwischen dem ersten Schenkel und einer Lauffläche des Kolbens zwischen 16° und 18° und der definierte Winkel zwischen dem zweiten Schenkel und der Lauffläche des Kolbens zwischen 59° und 61 °. Ein derart ausgeführter Dichtring kann dem hohen hydraulischen Druck noch besser Stand halten. Dadurch wird die Lebensdauer des Dichtrings und somit der erfindungsgemäßen Kolbenpumpe verlängert und die Ausfallzeiten von Kolbenpumpen durch defekte Dichtringe weiter minimiert.

Vorteilhafte Ausführungsformen der Erfindung sind in den Zeichnungen dargestellt und werden nachfolgend beschrieben. In den Zeichnungen bezeichnen gleiche Bezugszeichen Komponenten bzw. Elemente, die gleiche bzw. analoge Funktionen ausführen.

### Kurze Beschreibung der Zeichnungen

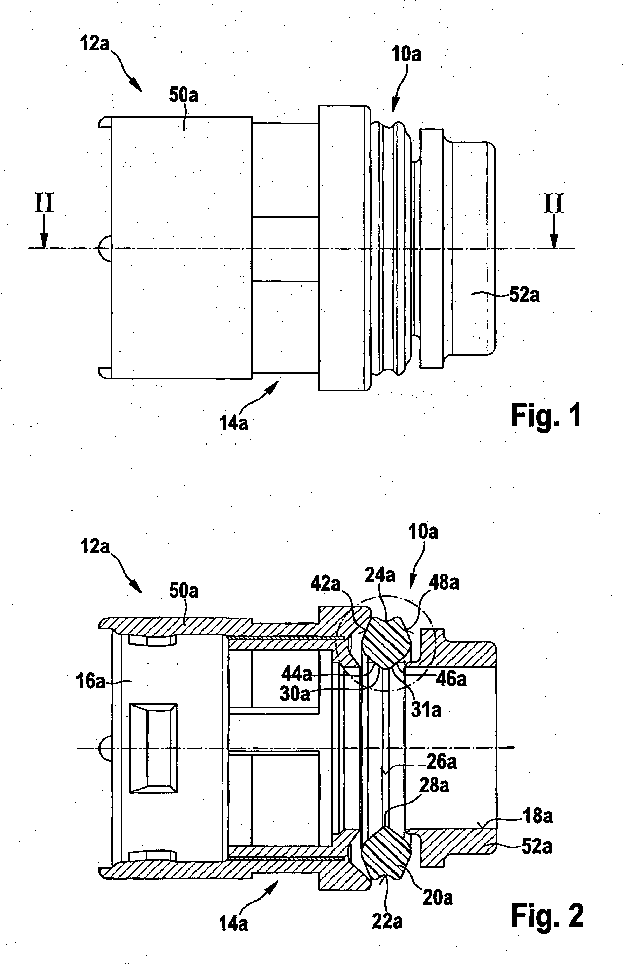

Fig. 1 zeigt einen Teil einer einen Filter und einen Führungsring aufweisenden Kolbenpumpe vor dem Zusammenfügen des Filters und des Führungsringes, wobei zwischen den beiden Bauteilen eine Nut ausgebildet ist, in welcher ein erfindungsgemäßer Dichtring in einer ersten Ausführungsform eingelegt ist.
Fig. 2 zeigt eine Schnittdarstellung der Kolbenpumpe aus Fig. 1.

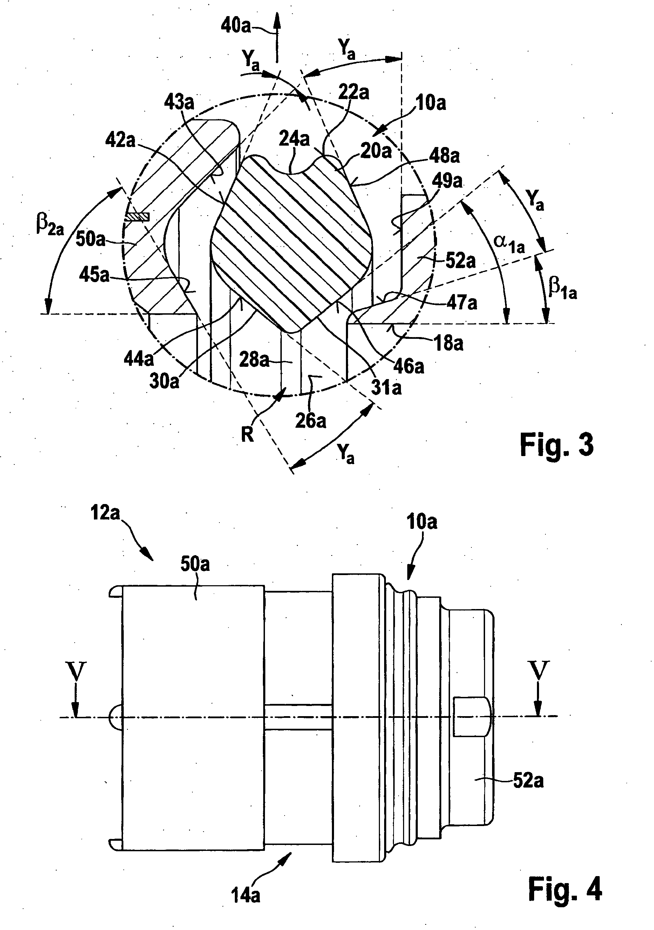

Fig. 3 zeigt ein Detail der Schnittdarstellung des erfindungsgemäßen Dichtrings aus Fig. 2, welcher eine Dichtlippe aufweist, deren Schenkel Ausgangswinkel mit der Lauffläche des Kolbens einschließen.
Fig. 4 zeigt einen Teil der Kolbenpumpe nach dem Zusammenfügen des Filters und des Führungsringes, mit dem erfindungsgemäßen Dichtring im eingebauten Zustand.

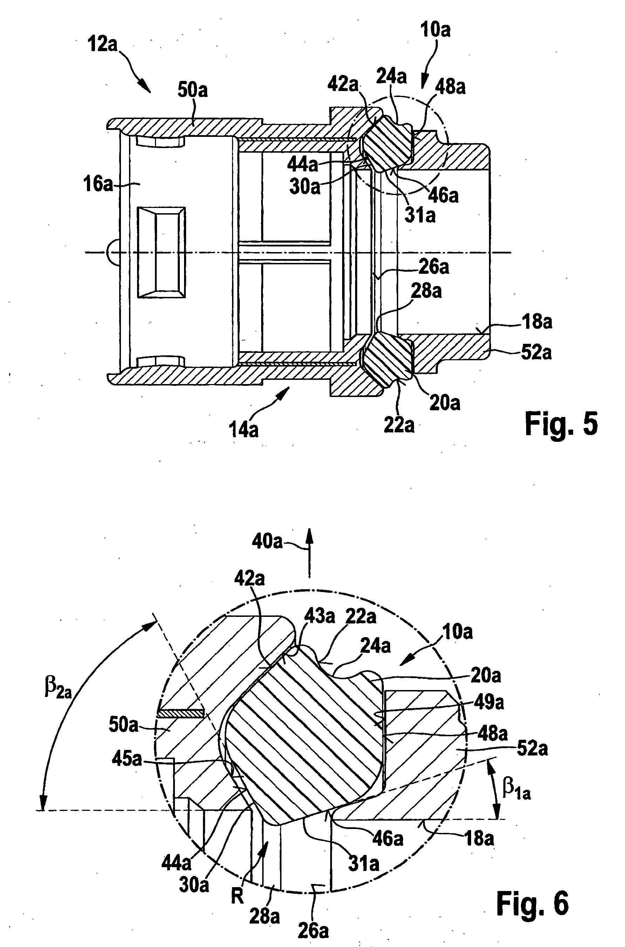

Fig. 5 zeigt eine Schnittdarstellung der Kolbenpumpe aus Fig. 4.
Fig. 6 zeigt ein Detail der Schnittdarstellung des erfindungsgemäßen Dichtrings aus Fig. 5, welcher die Dichtlippe aufweist, deren Schenkel definierte Zielwinkel mit der Lauffläche des Kolbens einschließen, welche beim Einbau durch Verformung des Dichtringes erreicht werden.

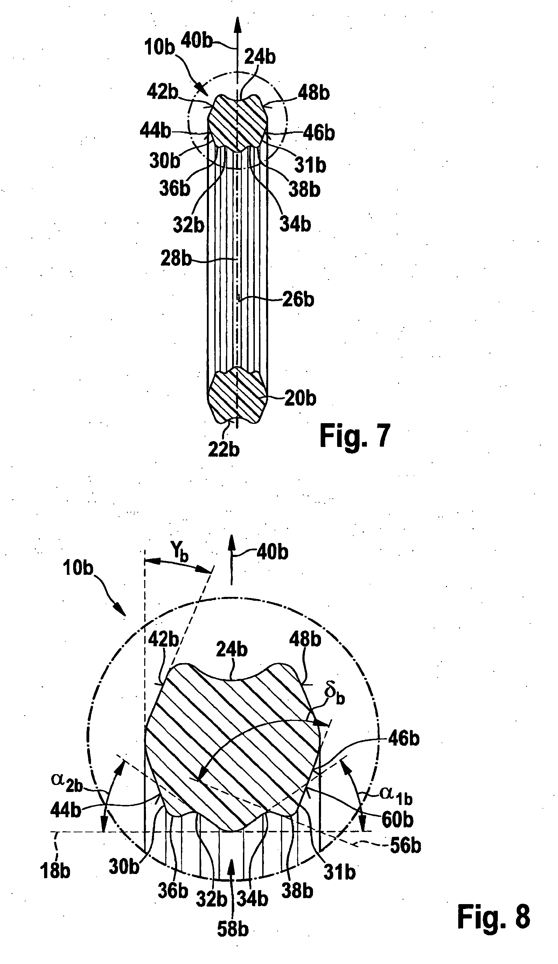

Fig. 7 zeigt eine Schnittdarstellung eines erfindungsgemäßen Dichtringes in einer zweiten Ausführungsform, welcher zwei an seiner Innenumfangsfläche umlaufende Nuten ausbildet, zwischen denen die Dichtlippe ausgeformt ist.
Fig. 8 zeigt ein Detail der Schnittdarstellung des erfindungsgemäßen Dichtrings aus Fig. 7.

### Ausführungsformen der Erfindung

Verschiedene Pumpenkomponenten wie beispielsweise sich beim Pumpen eines zu fördernden Fluids bewegende Pumpenkolben bzw. die bewegten Pumpenkloben dichtende feststehende Bauteile, wie beispielsweise Dichtringe, sind in der-Regel erhöhtem Verschleiß ausgesetzt. Der Verschleiß betrifft regelmäßig Oberflächenbereiche, welche durch Druck bzw. Flächenpressung beansprucht sind. Beispielsweise verschleißen die Pumpenkolben aufgrund von Oszillationen, Querkräften und Reibung relativ stark, wobei auch Spaltextrusion am Dichtring, Verschleiß am Führungsring bzw. an der Exzenterwelle regelmäßig auftreten können. Über eine Lagerstelle zwischen Exzenter und Pumpenkolben wird beispielsweise eine Rotationsbewegung eines Antriebs der Pumpe in eine Hubbewegung zur Druckerzeugung umgesetzt, wodurch Verschleißbelastungen in der Lagerstelle entstehen können. Sowohl Pumpenkolben als auch Dichtringe müssen deshalb gegen erhöhten Verschleiß geschützt werden, um ihre Pump- bzw. Dichtfunktion aufrechterhalten zu können.

Fig. 1 bis 6 zeigen jeweils einen Ausschnitt einer Kolbenpumpe 12a, welche beispielsweise als Förder- oder Rückförderpumpe eines hydraulischen Pumpsystems eines Fahrzeugs eingesetzt wird. Da derartige Kolbenpumpen in Aufbau und Funktion an sich bekannt sind, beschränken sich Zeichnung und Beschreibung zur klaren Darstellung der Erfindung auf den erfindungsrelevanten Teil der Kolbenpumpe 12a. Die Kolbenpumpe 12a umfasst ein einen Filter 50a und einen Führungsring 52a aufweisendes Kolbengehäuse 14a, in welchem ein Kolben 16a angeordnet ist, welcher in einer gestuften Kolbenbohrung 54a axial verschiebbar aufgenommen ist.

Zur dynamischen Abdichtung des in dem Kolbengehäuse 14a geführten Kolbens 16a ist ein Dichtring 10a, 10b in eine Ringstufe der Kolbenbohrung 54a eingesetzt, wobei der Dichtring 10a, 10b an einem eine Lauffläche 18a, 18b ausbildenden Außenumfang des Kolbens 16a anzuordnen ist. Fig. 1 bis 6 zeigen einen erfindungsgemäßen Dichtring 10a in einer ersten Ausführungsform. Fig. 7 und 8 zeigen einen erfindungsgemäßen Dichtring 10b in einer zweiten Ausführungsform. Der rohrförmige, den Kolben 16a umschließende, in die Kolbenbohrung 54a eingesetzte Filter 50a hält den Dichtring 10a, 10b zusammen mit dem Führungsring 52a axial in der Kolbenbohrung 54a, indem zwischen den beiden Bauteilen 50a, 52a eine Nut 24a ausgebildet ist, in welcher der Dichtring 10a, 10b eingelegt ist.

Der Dichtring 10a, 10b umfasst einen ringförmigen Grundkörper 20a, 20b, an dessen Außenumfangsfläche 22a, 22b mindestens eine umlaufende Nut 24a, 24b und an dessen Innenumfangsfläche 26a, 26b mindestens eine umlaufende Dichtlippe 28a, 28b ausgeformt sind. Die Schenkel 30a, 30b, 31 a, 31 b der Dichtlippe 28a, 28b schließen im eingebauten Zustand des Dichtringes 10a, 10b mit der Lauffläche 18a, 18b jeweils einen definierten Winkel β₁ₐ, β₂ₐ ein. In den vorliegenden Ausführungsbeispielen wird ein erster Schenkel 30a, 30b axial mit einem höheren Druck und ein zweiter Schenkel 31 a, 31 b axial mit einem niedrigeren Druck beaufschlagt.

Die Dichtlippe 28a, 28b ist vorzugsweise mittig an der Innenumfangsfläche 26a, 26b ausgebildet und weist vorzugsweise einen Radius R von mindestens 0,1 mm auf, wobei auch größere Radien, wie beispielsweise R = 0.225mm und größer denkbar wären.

Wie bereits erwähnt wurde, ist der Dichtring 10a, 10b in einer als eine im Kolbengehäuse 14a verlaufende Nut 24a ausgeführten Ringstufe der Kolbenbohrung 54a der Kolbenpumpe 12a angeordnet, welche an einer Seite axial mit einem hydraulischen Druck beaufschlagt wird. In vorteilhafter Weise dichtet der Dichtring 10a, 10b den Kolben 16a dynamisch ab, welcher eine Hubbewegung im inneren Durchmesser des Dichtringes 10a, 10b ausführt.

Um die Dichtwirkung des Dichtrings 10a, 10b zu erhöhen, werden erfindungsgemäß ausgehend von Ausgangswinkeln α₁ₐ, α₂ₐ, α_{1b}, α_{2b} die definierten Winkel β₁ₐ, β₂ₐ beim Einbau durch Verformung des Dichtringes 10a, 10b erreicht. Hierzu erfährt der Dichtring 10a, 10b bei der Montage eine Verwindung γₐ, γ_{b} um einen Mittelpunkt seines Profils. Vorzugsweise beträgt die Verwindung γₐ, γ_{b} des Profils des Dichtringes 10a, 10b zwischen 19° und 22°.

Die Ausgangswinkel α₁ₐ, α₂ₐ, α_{1b}, α_{2b} der Schenkel 30a, 30b, 31a, 31b der Dichtlippe 28a, 28b zur Lauffläche 18a, 18b betragen ungefähr 38.75°. Vorzugsweise wird hierbei eine Toleranz von maximal 3 bis 5° zugelassen. Die Anlageflächen 42a, 44a, 46a, 48a des Dichtringes 10a, 10b sind mittig mit einem Winkel β₁ₐ, β₂ₐ versehen. Wird der Dichtring 10a, 10b komprimiert, so ist vorgesehen, dass der Ring 10a, 10b sich um den Winkel β₁ₐ, β₂ₐ mit dem Drehpunkt im Mittelpunkt des Querschnitts in sich verdreht. Durch die Verdrehung wird die Dichtlippe 28a, 28b ebenfalls verdreht, wodurch die Dichtlippenschenkel 30a, 30b, 31 a, 31 b einen Winkel zwischen 16° und 18°, idealerweise von 17,5° luftseitig bzw. niederdruckseitig und einen Winkel zwischen 59° und 61°, idealerweise von 60° flüssigkeitsseitig bzw. hochdruckseitig annehmen.

Bei der Montage erfährt der Dichtring 10a eine Verwindung γₐ seines Profils um bevorzugt 21°. Dadurch ändert sich der Winkel α₂ₐ von ungefähr 38° gemäß Fig. 3 fluidseitig bzw. hochdruckseitig zwischen dem zweiten Schenkel 31a und der Lauffläche 18a auf ungefähr 60° gemäß Fig. 6. Luftseitig bzw. niederdruckseitig sinkt der Winkel α₁ₐ von ungefähr 38° gemäß Fig. 3 zwischen dem ersten Schenkel 30a und der Lauffläche 18a gleichzeitig auf ungefähr 18° gemäß Fig. 6. Fig. 3 zeigt den Dichtring 10a nebst Einbauraum, bevor der Filter 50a und der Führungsring 52a montiert sind. Im eingebauten Zustand gemäß Fig. 5 und 6 liegen jeweils Anlageflächen 42a, 44a, 46a, 48a des Dichtringes 10a an den korrespondierenden Flächen 43a, 45a des Filters 50a und den korrespondierenden Flächen 47a, 49a des Führungsringes 52a parallel aneinander an.

Durch die Nut 24a, 24b im Außenquerschnitt bzw. an der Außenumfangsfläche 22a, 22b wirkt die Steifigkeit des Querschnitts des Dichtringes 10a, 10b derart federnd, dass die innere Dichtlippe 28a, 28b auf die Lauffläche 18a, 18b gepresst wird, sobald der Querschnitt komprimiert wird.

Fig. 7 und 8 zeigen die zweite Ausführungsform des Dichtrings 10b, welcher zwei an der Innenumfangsfläche 26b des Dichtringes 10b umlaufende Nuten 32b, 34b aufweist, welche zwei Lippen 36b, 38b bilden, zwischen denen die Dichtlippe 28b ausgeformt ist. Die Dichtlippe 28b steht in radialer Richtung 40b über die Lippen 36b, 38b über. Die Nuten 32b, 34b im Innenradius bzw. an der Innenumfangsfläche 26b sind derart gestaltet, dass ein radialer oder keilförmiger Absatz 58b in einen Spalt h eindringen kann und dadurch eine Innenkante 56b anhebt, bis diese parallel zur Lauffläche 18b verläuft. Der Absatz 58b sollte die Höhe s und die Länge f haben. Vorzugsweise weist die Außenkontur des Absatzes 58b einen Radius entsprechend der Radien der Innennuten 32b, 34b auf. Diese sollten jedoch kurz genug sein, um eine Spaltextrusion der Dichtlippe 28b zu vermeiden und zudem einen Steigungsverlauf haben, welcher ein leichtes Anheben der Lippe 38b ermöglicht. Wichtig ist ebenfalls, dass die Höhe h möglichst ausreichend groß ist, um im verformten Zustand nicht auf der Lauffläche 18b aufzuliegen und dadurch an der nicht angehobenen Seite spaltextrusionsgefährdet zu sein. Der Winkel δ_{b} zwischen der Innenkante 56b und einer Seitenfläche 60b des Dichtringes 10b beträgt vorzugsweise ca. 90° +/-10°, um dem Dichtring 10b einen sicheren Halt auf dem Absatz 58b zu gewähren.

Es ergibt sich eine Winkeldifferenz der Dichtlippenschenkel 30b, 31b von 60°-17,5° = 42,5°, welche pro Schenkel 30b, 31 b jeweils mit γ_{b} = 42,5°/2 = 21,25°. auszugleichen ist. Dies bedeutet, dass der Dichtring 10b eine Verwindung γ_{b} = 21,25° erfährt, um nach dem Verdrehen des Dichtrings 10b beidseitig senkrechte Anlageflächen auszubilden. Der Ausgangswinkel α_{1b}, α_{2b} beträgt 60°-21,25° = 38,75° = 17;5°+21,25°. Je nach den Abmaßen des Dichtrings 10b wird h so groß vorgegeben, dass die Lippen 36b, 38b bei dem verdrehten Dichtring 10b weder die Lauffläche 18b berühren noch spaltextrusionsgefährdet sind.

In einer Ausgestaltung der Erfindung können auch weitere Dichtlippen und/oder Nuten sowie auch Dichtlippen und/oder Nuten in anderen geometrischen Formen an dem erfindungsgemäßen Dichtring 10a, 10b vorgesehen sein.

Die beschriebenen Pumpenkolben und Dichtringe werden beispielsweise in Pumpsystemen der modernen Fahrzeugtechnik eingesetzt, welche beispielhaft die Sicherheitstechnologien wie ABS (Anti-Blockier-System), ESP (elektronisches Stabilisierungsprogramm), EHB (elektrohydraulische Bremse), TCS (Traction Control System) oder ASR (Antischlupfregelung) betreffen. Der erfindungsgemäße Dichtring kann jedoch nicht nur in den zuvor aufgeführten Pumpsystemen verwendet werden, sondern in allen Systemen, in welchen dynamisch wechselnd translatorisch beanspruchte Dichtringe erforderlich sind.

## Patentansprüche

1. Dichtring (10a, 10b) für eine Kolbenpumpe zur dynamischen Abdichtung eines in einem Kolbengehäuse (14a) oder Führungsring (52a) geführten Kolbens (16a) der Kolbenpumpe (12a), wobei der Dichtring (10a, 10b) an einem eine Lauffläche (18a, 18b) ausbildenden Außenumfang des Kolbens (16a) anzuordnen ist, mit einem ringförmigen Grundkörper (20a, 20b), an dessen Außenumfangsfläche (22a, 22b) mindestens eine umlaufende Nut (24a, 24b) und an dessen Innenumfangsfläche (26a, 26b) mindestens eine umlaufende Dichtlippe (28a, 28b) ausgeformt sind, deren Schenkel (30a, 30b, 31 a, 31 b) im eingebauten Zustand des Dichtringes (10a, 10b) mit der Lauffläche (18a, 18b) jeweils einen definierten Winkel (β₁ₐ, β₂ₐ) einschließen, wobei ausgehend von Ausgangswinkeln (α₁ₐ, α₂ₐ, α_{1b}, α_{2b}) die definierten Winkel (β₁ₐ, β₂ₐ) beim Einbau durch Verformung des Dichtringes (10a, 10b) erreicht werden, **dadurch gekennzeichnet,**
**dass** der Dichtring (10a, 10b) bei der Montage eine Verwindung (γₐ, γ_{b}) um einen Mittelpunkt seines Profils erfährt.

2. Dichtring nach Anspruch 1, **dadurch gekennzeichnet, dass** die Verwindung (γ₁, γ_{b}) des Profils des Dichtringes (10a, 10b) zwischen 19° und 22° beträgt.

3. Dichtring nach Anspruch 1 oder 2, **dadurch gekennzeichnet, dass** Dichtring nach einem der Ansprüche 1 bis 3, **gekennzeichnet durch** zwei an der Innenumfangsfläche (26b) des Dichtringes (10b) umlaufende Nuten (32b, 34b), welche zwei Lippen (36b, 38b) bilden, zwischen denen die Dichtlippe (28b) ausgeformt ist.

4. Dichtring nach Anspruch 3, **dadurch gekennzeichnet, dass** die Dichtlippe (28b) in radialer Richtung (40b) über die Lippen (36b, 38b) übersteht.

5. Dichtring nach einem der Ansprüche 1 bis 4, **dadurch gekennzeichnet, dass** die Dichtlippe (28a, 28b) einen Radius (R) aufweist, welcher zwischen 0,1 und 0,4mm beträgt.

6. Kolbenpumpe mit einem in einem Kolbengehäuse (14a) oder Führungsring geführten Kolben (16a), **gekennzeichnet durch** einen Dichtring (10a, 10b) zur dynamischen Abdichtung des Kolbens (16a) der Kolbenpumpe (12a) nach einem der Ansprüche 1 bis 5.

7. Kolbenpumpe nach Anspruch 6, **dadurch gekennzeichnet, dass** der Dichtring (10a) über mindestens drei Anlageflächen (42a, 44a, 46a, 48a) in einer zwischen zwei Bauteilen (50a, 52a) der Kolbenpumpe (12a) verlaufenden Nut (54a) angeordnet ist.

8. Kolbenpumpe nach Anspruch 6 oder 7, **dadurch gekennzeichnet, dass** ein erster Schenkel (30a, 30b) des Dichtrings (10a, 10b) axial mit einem höheren Druck und ein zweiter Schenkel (31 a, 31 b) des Dichtrings (10a, 10b) axial mit einem niedrigeren Druck beaufschlagt wird.

9. Kolbenpumpe nach einem der Ansprüche 6 bis 8, **dadurch gekennzeichnet, dass** der definierte Winkel (β₁ₐ) zwischen dem ersten Schenkel (30a) und einer Lauffläche (18a) des Kolbens (16a) zwischen 16° und 18° und der definierte Winkel (β₂ₐ) zwischen dem zweitem Schenkel (31 a) und der Lauffläche (18a) des Kolbens (16a) zwischen 59° und 61° beträgt.

## Claims

1. Sealing ring (10a, 10b) for a piston pump for the dynamic sealing of a piston (16a) of the piston pump (12a), said piston being guided in a piston housing (14a) or guide ring (52a), wherein the sealing ring (10a, 10b) is to be arranged on an outer circumference of the piston (16a), said outer circumference forming a running surface (18a, 18b), comprising an annular basic body (20a, 20b), on the outer circumferential surface (22a, 22b) of which at least one encircling groove (24a, 24b) is formed and on the inner circumferential surface (26a, 26b) of which at least one encircling sealing lip (28a, 28b) is formed, the limbs (30a, 30b, 31a, 31b) of which sealing lips each enclose a defined angle (β₁ₐ, β₂ₐ) with the running surface (18a, 18b) in the installed state of the sealing ring (10a, 10b), wherein, starting from initial angles (α₁ₐ, α₂ₐ, α_{1b}, α_{2b}), the defined angles (β₁ₐ, β₂ₐ) are achieved by deformation of the sealing ring (10a, 10b) during installation **characterized in that** the sealing ring (10a, 10b) undergoes a distortion (γₐ, γ_{b}) about a centre point of its profile during fitting.

2. Sealing ring according to Claim 1, **characterized in that** the distortion (γₐ, γ_{b}) of the profile of the sealing ring (10a, 10b) is between 19° and 22°.

3. Sealing ring according to Claim 1, **characterized by** two encircling grooves (32b, 34b) on the inner circumferential surface (26b) of the sealing ring (10b), said grooves forming two lips (36b, 38b), between which the sealing lip (28b) is formed.

4. Sealing ring according to Claim 3, **characterized in that** the sealing lip (28b) protrudes over the lips (36b, 38b) in the radial direction (40b).

5. Sealing ring according to one of Claims 1 to 4, **characterized in that** the sealing lip (28a, 28b) has a radius (R) which is between 0.1 and 0.4 mm.

6. Piston pump with a piston (16a) guided in a piston housing (14a) or guide ring, **characterized by** a sealing ring (10a, 10b) for the dynamic sealing of the piston (16a) of the piston pump (12a) according to one of Claims 1 to 5.

7. Piston pump according to Claim 6, **characterized in that** the sealing ring (10a) is arranged via at least three contact surfaces (42a, 44a, 46a, 48a) in a groove (54a) running between two components (50a, 52a) of the piston pump (12a).

8. Piston pump according to Claim 6 or 7, **characterized in that** a first limb (30a, 30b) of the sealing ring (10a, 10b) is acted upon axially with a higher pressure and a second limb (31a, 31b) of the sealing ring (10a, 10b) is acted upon axially with a lower pressure.

9. Piston pump according to one of Claims 6 to 8, **characterized in that** the defined angle (β₁ₐ) between the first limb (30a) and a running surface (18a) of the piston (16a) is between 16° and 18° and the defined angle (β₂ₐ) between the second limb (31a) and the running surface (18a) of the piston (16a) is between 59° and 61°.

## Revendications

1. Bague d'étanchéité (10a, 10b) pour une pompe à piston pour réaliser l'étanchéité dynamique d'un piston (16a) de la pompe à piston (12a) guidé dans un boîtier de piston (14a) ou une bague de guidage (52a), la bague d'étanchéité (10a, 10b) pouvant être disposée sur une périphérie extérieure du piston (16a) réalisée sur une face de glissement (18a, 18b), avec un corps de base annulaire (20a, 20b), au niveau de la surface périphérique extérieure (22a, 22b) duquel est formée au moins une rainure périphérique (24a, 24b) et au niveau de la surface périphérique intérieure (26a, 26b) duquel est formée au moins une lèvre d'étanchéité périphérique (28a, 28b), dont les branches (30a, 30b, 31a, 31b) forment, dans l'état installé de la bague d'étanchéité (10a, 10b), avec la face de glissement (18a, 18b), à chaque fois un angle défini (β₁ₐ, β₂ₐ), et partant des angles de départ (α₁ₐ, α₂ₐ, α_{1b}, α_{2b}), les angles définis (β₁ₐ, β₂ₐ) étant obtenus lors de l'installation par déformation de la bague d'étanchéité (10a, 10b), **caractérisée en ce que** la bague d'étanchéité (10a, 10b), lors du montage, subit une torsion (γₐ, γ_{b}) autour d'un centre de son profil.

2. Bague d'étanchéité selon la revendication 1, **caractérisée en ce que** la torsion (γₐ, γ_{b}) du profil de la bague d'étanchéité (10a, 10b) est comprise entre 19° et 22°.

3. Bague d'étanchéité selon la revendication 1 ou 2, **caractérisée par** deux rainures périphériques (32b, 34b) au niveau de la surface périphérique intérieure (26b) de la bague d'étanchéité (10b), qui forment deux lèvres (36b, 38b), entre lesquelles est formée la lèvre d'étanchéité (28b).

4. Bague d'étanchéité selon la revendication 3, **caractérisée en ce que** la lèvre d'étanchéité (28b) fait saillie au-delà des lèvres (36b, 38b) dans la direction radiale (40b).

5. Bague d'étanchéité selon l'une quelconque des revendications 1 à 4, **caractérisée en ce que** la lèvre d'étanchéité (28a, 28b) présente un rayon (R) qui est compris entre 0,1 et 0,4 mm.

6. Pompe à piston comprenant un piston (16a) guidé dans un boîtier de piston (14a) ou une bague de guidage, **caractérisée par** une bague d'étanchéité (10a, 10b) pour l'étanchéité dynamique du piston (16a) de la pompe à piston (12a) selon l'une quelconque des revendications 1 à 5.

7. Pompe à piston selon la revendication 6, **caractérisée en ce que** la bague d'étanchéité (10a) est disposée par le biais d'au moins trois faces d'appui (42a, 44a, 46a, 48a) dans une rainure (54a) s'étendant entre deux composants (50a, 52a) de la pompe à piston (12a).

8. Pompe à piston selon la revendication 6 ou 7, **caractérisée en ce qu'**une première branche (30a, 30b) de la bague d'étanchéité (10a, 10b) est sollicitée axialement avec une pression plus élevée et une deuxième branche (31a, 31b) de la bague d'étanchéité (10a, 10b) est sollicitée axialement avec une pression inférieure.

9. Pompe à piston selon l'une quelconque des revendications 6 à 8, **caractérisée en ce que** l'angle défini (β₁ₐ) entre la première branche (30a) et une face de glissement (18a) du piston (16a) est compris entre 16° et 18° et l'angle défini (β₂ₐ) entre la deuxième branche (31a) et la face de glissement (18a) du piston (16a) est compris entre 59° et 61°.
